# EUROPÄISCHE PATENTANMELDUNG

(11) **EP 1 752 731 A2**
(43) Veröffentlichungstag der Anmeldung: **14.02.2007**
(21) Anmeldenummer: 06024457.1
(22) Anmeldetag: 29.11.2002
(51) Int. Cl.: G01B 11/00, G06F 3/02, G01L 5/16

(54) **Anordnung zum Erfassen von Relativbewegungen oder Relativpositionen zweier Objekte**

(30) Priorität: 30.11.2001 DE 10158775
(62) Teilanmeldung aus: 02791743.4
(71) Anmelder: 3DConnexion GmbH, 82229 Seefeld (DE)
(72) Erfinder: Gombert, Bernd, 82284 Grafrath (DE)
(74) Vertreter: Schmidt, Steffen J.

(57) **Zusammenfassung**

Eine optoelektronische Anordnung zum Erfassen von Relativbewegungen oder Relativpositionen zweier Objekte, wobei die Anordnung mindestens vier optoelektronische Elemente umfasst und die optoelektronischen Elemente auf mindestens einer ersten Ebene und einer zweiten von der ersten unterschiedlichen Ebene angeordnet sind, dergestalt, dass mindestens drei optoelektronische Elemente auf der ersten Ebene und mindestens ein optoelektronisches Element auf der zweiten Ebene angeordnet ist. Außerdem mit dieser Anordnung ausgerüsteter Kraft- und/oder Momentensensor mit einer ersten Platte und einer zweiten Platte, wobei die ersten Platte und die zweite Platte elastisch miteinander verbunden und relativ zueinander bewegbar sind. Schließlich eine Personalcomputer-Tastatur die mit einem solchen Kraft- und/oder Momentensensor ausgestattet ist.

## Beschreibung

### Hintergrund der Erfindung

Die Erfindung bezieht sich auf eine optoelektronische Anordnung zum Erfassen von Relativbewegungen oder Relativpositionen zweier Objekte, wobei die Anordnung mindestens vier optoelektronische Elemente umfasst. Ferner betrifft die Erfindung einen Kraft- und/oder Momentensensor, der sich einer solchen Anordnung bedient. Schließlich betrifft die Erfindung eine PC-Tastatur, die den erfindungsgemäßen Kraft- und/oder Momentensensor aufweist.

### Stand der Technik

Für den Einsatz in Anordnungen zum Erfassen von Relativbewegungen oder Relativpositionen zweier Objekte in Kraft- und/oder Momentensensoren sind Anordnungen mit optoelektronischen Messzellen z.B. aus der DE 36 11 337 A1 und der DE 33 14 089 C2 sowie Anordnungen mit Dehnungsmessstreifen z.B. aus der EP 0 117 334 A2 bekannt. Dabei haben sich Anordnungen mit optoelektronischen Messzellen weitgehend durchgesetzt. Der Grund sind der einfache Aufbau verbunden mit einer hohen Präzision und Zuverlässigkeit.

DE 36 11 337 A1 offenbart eine in einer Kunststoffkugel untergebrachte optoelektronische Anordnung, die gleichzeitig sechs Komponenten, nämlich Verschiebungen entlang dreier Achsen und Winkeldrehungen um drei Achsen, erfassen kann. Zu diesem Zweck sind sechs lichtemittierende Einrichtungen in gleichen Winkelabständen zueinander in einer Ebene angeordnet. Jeder lichtemittierenden Einrichtung ist eine fest angeordnete Schlitzblende vorgeschaltet. Die Relativbewegungen oder Relativpositionen werden durch lichtempfindliche Detektoren aufgenommen, die relativ zu der Anordnung aus lichtemittierenden Einrichtungen und Schlitzblenden beweglich angeordnet sind, und deren Detektorachse im wesentlichen senkrecht zur Schlitzrichtung verläuft. Die Anordnung erfordert relativ geringen Konstruktionsaufwand, da die lichtemittierenden Einrichtungen und Blenden, sowie ggf. andere elektronische Einrichtungen zum Ansteuern und Auswerten mit konventioneller Löttechnik auf einer einzigen Platine angeordnet werden können, die fest mit einem ersten Objekt verbunden werden kann. Die positionsempfindlichen Detektoren werden mit dem zweiten Objekt verbunden. Nachteilig ist jedoch, dass die Anordnung eine relativ große Fläche beansprucht. Ursache ist die relativ große räumliche Ausdehnung der Blenden und Detektoren, die ringförmig um die Lichtemissionseinrichtungen angeordnet sind. Hierdurch sind einer Miniaturisierung der Anordnung Grenzen gesetzt.

Weitere Dokumente ohne Anspruch auf Vollständigkeit, die den technischen Hintergrund für die Erfindung zeigen, sind:
DE 27 27 704 C3, DE 36 11 336 C2, DE 32 40 251 A1, US 3,921,445, US 3,628,394.

### Der Erfindung zugrundeliegendes Problem

Optoelektronische Anordnungen zum Messen von Relativbewegungen oder Relativpositionen, sowie Kraft- und/oder Momentensensoren, die sich solcher Anordnungen bedienen, haben in der Vergangenheit vor allem in industriellen Anwendungen Bedeutung gewonnen. Beispiele sind das Steuern von Robotern und das Messen von Kräften an Kfz-Prüf- und Messständen. Den Anordnungen und Sensoren bieten sich aber prinzipiell auch im Bürobereich sowie in der Unterhaltungselektronik kommerziell höchst interessante Anwendungsmöglichkeiten. Sie haben hierbei die Funktion eines Eingabegerätes, mit dem bis zu sechs Komponenten eingegeben werden können, im Gegensatz zu einem Joystick, einer Maus oder einem Trackball, die im allgemeinen die Eingabe von nur zwei Komponenten erlauben. Eine einfache und bequeme Eingabe von sechs Komponenten, wie es ein Kraft- und/oder Momentensensor mit einer optoelektronischen Anordnung erlaubt, ist zum Beispiel zur Steuerung von 3D-Konstruktinssoftware und anspruchsvollen Computerspielen wünschenswert. Die bisherigen Eingabegeräte sind allerdings aufgrund ihres Flächenbedarfs ausgesprochen unhandlich, was einer weiterreichenden Verbreitung wesentlich entgegenstand. Eine Miniaturisierung würde den Einbau z.B. in Spielkonsolen, PC-Tastaturen oder Notebook-Computern erlauben, und dadurch eine breite Marktdurchdringung ermöglichen.

Ausgehend vom Stand der Technik liegt somit der vorliegenden Erfindung die Aufgabe zugrunde, eine Anordnung zum Erfassen von Relativbewegungen oder Relativpositionen zweier Objekte zu schaffen, die im Vergleich zu den bekannten Anordnungen einen geringeren Flächenbedarf aufweist. Darüber hinaus liegt der Erfindung die Aufgabe zugrunde, einen Kraft- und/oder Momentensensor zu schaffen, der ebenfalls einen im Vergleich zu den bekannten Sensoren geringeren Raumbedarf aufweist. Schließlich liegt der Erfindung die Aufgabe zugrunde, ein Eingabegerät für den Einsatz im Büro zu schaffen, das eine unkomplizierte Eingabe von bis zu sechs Kraft- bzw. Drehmomentkomponenten erlaubt.

### Erfindungsgemäße Lösung

Zum Erfüllen dieser Aufgabe lehrt die Erfindung eine optoelektronische Anordnung zum Erfassen von Relativbewegungen oder Relativpositionen zweier Objekte in einer ersten Ausführungsform, wobei die Anordnung mindestens vier optoelektronische Elemente umfasst, und durch die Merkmale des Anspruchs 1 definiert ist. Dabei sind die erste und die zweite Ebene, und gegebenenfalls alle weiteren Ebenen, im wesentlichen parallel zueinander angeordnet. Eine zweite erfindungsgemäße Ausführungsform einer optoelektronischen Anordnung zum Erfassen von Relativbewegungen oder Relativpositionen zweier Objekte wird durch den Anspruch 2 definiert. Dabei sind die mindestens vier optoelektronischen Elemente in zwei Flächen angeordnet, die sich nebeneinander befinden. Da die beiden Flächen - im Gegensatz zu Ebenen - einen definierten Rand haben, können sie im wesentlichen in der gleichen Ebene, aber beabstandet voneinander angeordnet sein. Alternativ dazu können die beiden Flächen auch in unterschiedlichen Ebenen (zum Beispiel auf unterschiedlichem Niveau) räumlich voneinander beabstandet angeordnet sein, sich also nicht berühren oder schneiden. Die Erfindung lehrt weiter einen Kraft- und/oder Momentensensor, der durch die Merkmale des Anspruchs 16 definiert ist. Schließlich lehrt sie eine Personalcomputer-Tastatur, die durch die Merkmale des Anspruchs 22 definiert ist.

### Aufbau und Weiterbildung der erfindungsgemäßen Lösung

In einer Ausführung der Erfindung ist jedes der vier optoelektronischen Elemente entweder ein positionsempfindlicher Detektor, bevorzugt ein positionsempfindlicher Infrarotdetektor, oder eine Lichtemissionsvorrichtung, bevorzugt Infrarot-Leuchtdioden (ILED). Jeder positionsempfindliche Detektor wird außerdem vorzugsweise von einer Lichtemissionseinrichtung beleuchtet, um eine Messzelle zu bilden.

In einer Weiterbildung der Erfindung wird eine Lichtemissionsvorrichtung von genau einem positionsempfindlicher Detektor beleuchtet, um eine Messzelle zu bilden. In einer alternativen Weiterbildung der Erfindung werden zwei positionsempfindliche Detektoren von einer Lichtemissionseinrichtung beleuchtet, um zwei Messzellen mit einer gemeinsamen Lichtemissionseinrichtung zu bilden. Dabei wird bevorzugt zu jedem Zeitpunkt nur der eine oder der andere der beiden positionsempfindlichen Detektoren ausgelesen, so dass die Lichtemissionseinrichtung immer nur mit jeweils einem der positionsempfindlichen Detektoren eine Messzelle bildet.

Dadurch, dass also zu jedem Zeitpunkt eine Lichtemissionseinrichtung nur einem positionsempfindlichen Detektor zugeordnet ist, kann das Ausgangssignal der positionsempfindlichen Detektoren verwendet werden, um die Ströme der ihnen jeweils zugeordneten Lichtemissionseinrichtungen so zu regeln, dass auf jeden positionsempfindlichen Detektor die gleiche konstante Lichtmenge tritt. Das hat den Vorteil, dass alle Messzellen in weiten Bereichen unbeeinflusst von Temperatur und Alterungseinflüssen sowie Verschmutzung und Bauteiltoleranz sind. Die Ausgangssignale der positionsempfindlichen Infrarotdetektoren werden außerdem zur Weiterverarbeitung an einen Analog/Digital-Wandler und von dort weiter an einen Mikroprozessor geleitet.

Eine besonders kompakte Bauweise wird in einer bevorzugten Weiterbildung der Erfindung dadurch erreicht, dass die Lichtemissionseinrichtungen so auf einer an jeder Stelle planen oder konvexen, geschlossen, gedachten ersten Fläche angeordnet sind, dass ihre jeweiligen Emissionsrichtungen in einen ersten Innenraum weisen, der durch die erste Fläche begrenzt wird. Die positionsempfindlichen Detektoren sind bevorzugt ebenfalls auf einer an jeder Stelle planen oder konvexen, geschlossen, gedachten zweiten Fläche angeordnet, und zwar so, dass ihre jeweiligen lichtempfindlichen Seiten in einen zweiten Innenraum weisen, der durch die zweite Fläche begrenzt wird. Der erste und der zweite Innenraum kommen bevorzugt teilweise oder sogar vollständig zur Deckung, so dass ein gemeinsamer Innenraum entsteht, um den die Lichtemissionseinrichtung und positionsempfindlichen Detektoren angeordnet sind. Folglich durchquert in einer bevorzugten Ausführung der Erfindung das Licht einer Messzelle von der Lichtemissionseinrichtung zum gegenüberliegenden positionsempfindlichen Detektor immer den gemeinsamen Innenraum.

Um mit der optoelektronischen Anordnung alle sechs Freiheitsgrade, also Verschiebungen entlang dreier linear unabhängiger Achsen und Drehungen um ebenfalls drei linear unabhängige Achsen, messen zu können, umfasst die Anordnung in einer bevorzugten Ausführung sechs positionsempfindliche Detektoren. Bevorzugt umfasst dabei jede Ebene drei positionsempfindliche Detektoren. Außerdem sind die positionsempfindlichen Detektoren in jeweils derselben Ebene bevorzugt in ihrer Orientierung in im wesentlichen gleichem Winkelabstand zueinander um eine Achse gedreht, die im wesentlichen senkrecht zu der Ebene verläuft, in der die positionsempfindlichen Detektoren angeordnet sind. Befinden sich also drei positionsempfindliche Detektoren in einer gemeinsamen Ebene, sind der zweite und der dritte positionsempfindliche Detektor um im wesentlichen 1/3 bzw. 2/3 einer ganzen Umdrehung bezüglich der Orientierung des ersten positionsempfindlichen Detektors gedreht.

In einer Weiterbildung der Erfindung sind paarweise eine Lichtemissionseinrichtung der ersten Ebene und einer Lichtemissionseinrichtung der zweiten Ebene übereinanderliegend angeordnet. Genauso liegen paarweise ein positionsempfindlicher Detektor der ersten Ebene und ein positionsempfindlicher Detektor der zweiten Ebene übereinander. Das bedeutet, dass die im wesentlichen senkrechten Projektionen der beiden Lichtemissionseinrichtungen bzw. der beiden positionsempfindlichen Detektoren auf einer der beiden Ebenen zusammenfallen. Besonders bevorzugt umfassen die Paare von übereinanderliegenden positionsempfindlichen Detektoren jeweils einen positionsempfindlichen Detektor zum Erfassen einer Bewegung im wesentlichen senkrecht zur ersten oder zweiten Ebene und einen positionsempfindlichen Detek- or der ersten Ebene und ein positionsempfindlicher Detektor der zweiten Ebene übereinander. Das bedeutet, dass die im wesentlichen senkrechten Projektionen der beiden Lichtemissionseinrichtungen bzw. der beiden positionsempfindlichen Detektoren auf einer der beiden Ebenen zusammenfallen. Besonders bevorzugt umfassen die Paare von übereinanderliegenden positionsempfindlichen Detektoren jeweils einen positionsempfindlichen Detektor zum Erfassen einer Bewegung im wesentlichen senkrecht zur ersten oder zweiten Ebene und einen positionsempfindlichen Detektor zum Erfassen einer Bewegung im wesentlichen waagerecht zu der ersten oder zweiten Ebene.

In einer besonders kompakten, und somit besonders bevorzugten Bauweise sind Lichtemissionseinrichtungen, die eine geringe laterale Ausdehnung haben, jeweils zwischen zwei Paaren positionsempfindlicher Detektoren angeordnet.

Die optoelektronische Anordnung zum Erfassen von Relativbewegungen oder Relativpositionen umfasst in einer bevorzugten Ausführung außerdem je eine im Strahlengang der Lichtemissionseinrichtung zwischen der Lichtemissionseinrichtung und dem positionsempfindlichen Detektor angeordnete Schlitzblende, so dass nur ein schmaler Lichtbalken auf den dahinterliegenden positionsempfindlichen Detektor fällt. Die Schlitzrichtung der Schlitzblende ist im wesentlichen senkrecht zur Detektorachse des positionsempfindlichen Detektors ausgerichtet.

Um Relativbewegungen oder Relativpositionen messen zu können, muss jeweils eine Komponente des Systems Lichtemissionseinrichtung, Schlitzblende, Detektor relativ zu den anderen beiden Elementen bewegbar sein. In der bevorzugten Ausführung sind die Lichtemissionseinrichtungen und positionsempfindlichen Detektoren fest auf einer Leiterplatte angebracht, während die Schlitzblenden relativ dazu beweglich sind. Das hat den Vorteil, dass alle elektronischen Komponenten auf einer einzigen Leiterplatte untergebracht werden können.

Lichtemissionseinrichtungen und positionsempfindliche Detektoren sind in einer besonders bevorzugten Ausführung auf der nach innen gerichteten Seite einer zylinderförmigen Platine angebracht.

Eine zylinderförmige Platine ist eine Platine, deren Fläche durch eine Zylinderfläche oder einen Teil einer Zylinderfläche definiert ist. Eine Zylinderfläche entsteht durch Parallelverschiebung einer geraden längs einer Kurve.

Unter anderem schirmt die Platine die optoelektronischen Detektoren vor von außen kommendem Streulicht ab.

Der erfindungsgemäße Kraft- und/oder Momentensensor umfasst eine erste und eine zweite Platte, wobei die erste und zweite Platte elastisch miteinander verbunden und relativ zueinander bewegbar sind. Er umfasst außerdem die erfindungsgemäße Anordnung zur Erfassung von Bewegungen der ersten und der zweiten Platte relativ zueinander. Dabei sind die Platten bevorzugt Leiterplatten, wobei die erste Platte alle elektronischen Komponenten, insbesondere die Lichtemissionseinrichtungen und die positionsempfindlichen Detektoren, sowie Steuerelektronik zum Regeln der Ströme der Lichtemissionseinrichtungen, ggf. Verstärker und einen Digitalteil zur Datenumwandlung und/oder andere Einrichtungen trägt. Durch Anordnen aller elektronischen Komponenten auf nur einer Leiterplatte wird der Bestückungsaufwand bei der Herstellung deutlich reduziert.

Die beiden Platten sind durch mindestens eine Feder- und/oder Dämpfungseinrichtung, bevorzugt aus einer der nachfolgenden Komponenten oder Kombinationen daraus, verbunden: Schraubenfedern, Federpaket, Elastomer, Gießharz. Diese Feder- und/oder Dämpfungseinrichtungen nehmen die Kräfte und Drehmomente auf. Kennt man ihre elastischen Eigenschaften, lassen sich aus den relativen Positionen der beiden Platten die auf die beiden Platten relativ zueinander wirkenden Kräfte und Drehmomente messen.

Bevorzugt sind die beiden Platten mittels dreier Feder- und/oder Dämpfungseinrichtungen elastisch miteinander verbunden. Dabei sind die Feder- und/oder Dämpfungseinrichtungen bevorzugt rotationssymmetrisch um ein Zentrum angeordnet, um das auch die Messzellen angeordnet sind. Dies hat den Vorteil, dass im Kraft- und/oder Momentensensor immer symmetrische Kräfte wirken. Besonders bevorzugt sind genau drei Feder- und Dämpfungseinrichtungen jeweils 1/3 einer ganzen Umdrehung zueinander gedreht angeordnet.

In einer bevorzugten Ausführung umfasst mindestens eine der Feder- und/oder Dämpfungseinrichtungen mindestens eine Schraubenfeder, die an ihren beiden gegebenüberliegenden Enden durch Löten fest mit der ersten bzw. zweiten Platte verbunden ist. Die Schraubenfedern können so in alle Richtungen belastet werden, d.h. es können Zug- und Druckkräfte sowie quer zur Feder angreifende Kräfte wirken, ohne dass sich die Federn in ihrem Sitz bewegen oder gar herausspringen.

Eine bevorzugte Ausführung des Kraft- und/oder Momentensensors umfasst weiterhin mindestens eine Anschlageinrichtung, welche die Relativbewegung der beiden Platten zueinander begrenzt. Dies ist vorzugsweise durch Anschlagbolzen realisiert, die fest mit einer Platte verbunden sind. Auf diese Weise wird der Kraft- und/oder Momentensensor gegen Überlastung geschützt.

Aus der erfindungsgemäßen Ausgestaltung der Anordnung zum Erfassen von Relativbewegungen oder Relativpositionen zweier Objekte ergeben sich folgende vorteilhafte Eigenschaften:
1. Äußerst kompakte Bauweise bei geringem Konstruktionsaufwand
2. Hohe Linearität, geringe Hysterese und weitgehende Verschleißfreiheit durch den Einsatz von optoelektronischen Messzellen.
   Aus der erfinderischen Ausgestaltung des Kraft- und/oder Momentensensors ergibt sich zusätzlich zu den obengenannten noch folgende vorteilhafte Eigenschaft:
3. Geringe Anfälligkeit auf Beschädigungen durch den Einsatz von Anschlageinrichtungen.
   Aus der erfinderischen Ausgestaltung der PC-Tastatur ergibt sich zusätzlich zu den obengenannten noch folgende vorteilhafte Eigenschaft:
4. Die Neue Personalcomputer-Tastatur erlaubt die unkomplizierte Eingabe von bis zu sechs Komponenten am Personalcomputer-Arbeitsplatz.

Weitere Merkmale, Eigenschaften, Vorteile und mögliche Abwandlungen werden für den Fachmann anhand der nachstehenden Beschreibung einer bevorzugten Ausführung deutlich, in der auf die beigefügte Zeichnungen Bezug genommen wird.

### Kurzbeschreibung der Zeichnungen

Fig. 1 zeigt eine bevorzugte Ausführung des erfindungsgemäßen Kraft- und/oder Momentensensors mit der erfindungsgemäßen optoelektronischen Anordnung zum Erfassen von Relativbewegungen oder Relativpositionen zweier Objekte in perspektivischer Ansicht ohne die zweite Platte.

Fig. 2 zeigt die selbe bevorzugte Ausführung des erfindungsgemäßen Kraft- und/oder Momentensensors mit der erfindungsgemäßen optoelektronischen Anordnung zum Erfassen von Relativbewegungen oder Relativpositionen zweier Objekte in perspektivischer Ansicht mit der zweiten Platte.

Fig. 3 zeigt eine weitere bevorzugte Ausführung des erfindungsgemäßen Kraft- und/oder Momentensensors mit der erfindungsgemäßen optoelektronischen Anordnung zum Erfassen von Relativbewegungen oder Relativpositionen zweier Objekte in perspektivischer Ansicht ohne die zweite Platte.

### Ausführliche Beschreibung der Ausführungsbeispiele

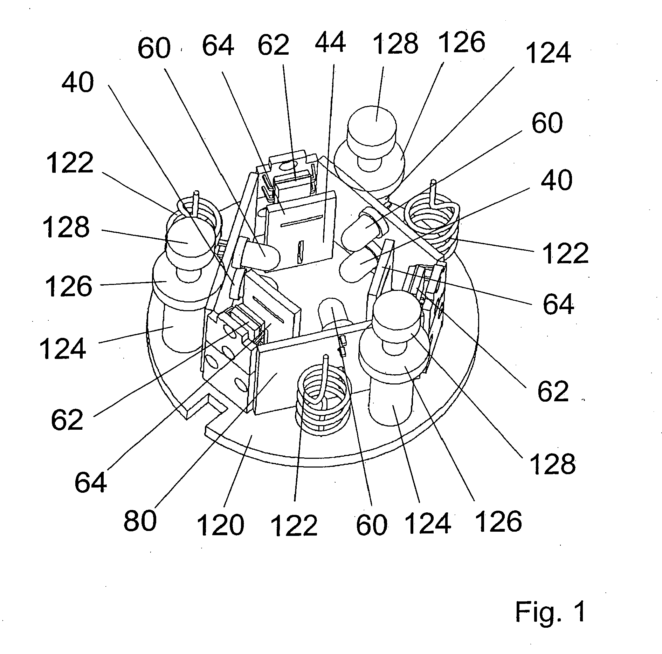

Die erste Ausführungsform einer optoelektronischen Anordnung zum Erfassen von Relativbewegungen oder Relativpositionen zweier Objekte, die in Fig. 1 dargestellt ist, weist zwölf optoelektronische Elemente, nämlich sechs ILEDs 40, 60 und sechs positionsempfindliche Infrarotdetektoren 42, 62, auf, die auf einer ersten Ebene und einer zweiten von der ersten unterschiedlichen Ebene angeordnet sind. Sechs optoelektronische Elemente 40, 42, nämlich drei ILEDs 40 und drei positionsempfindliche Infrarotdetektoren 42 sind auf der ersten Ebene und sechs optoelektronische Elemente 60, 62, nämlich drei ILEDs 60 und drei positionsempfindliche Infrarotdetektoren 62 sind auf der zweiten Ebene angeordnet.

Jeder positionsempfindliche Infrarotdetektor 42, 62 wird von einer ILED 40, 60 beleuchtet. Dabei beleuchtet eine ILED 40, 60 jeweils genau einen positionsempfindlichen Infrarotdetektor 42, 62, um eine Messzelle zu bilden. Der Lichtstrahl verläuft in der selben Ebene, in der die optoelektronischen Elemente der jeweiligen Messzelle angeordnet sind.

Die ILEDs 40, 60 sind paarweise auf Platinenstücken angebracht, die zusammen mit den Platinenstücken, auf denen die positionsempfindlichen Infrarotdetektoren 42, 62 angebracht sind, eine geschlossene Zylinderfläche 80 mit sechseckigem Querschnitt bilden. Denkt man sich die Öffnungen der Zylinderfläche durch eine obere und eine untere ebene Abschlussfläche geschlossen, entsteht eine an jeder Stelle plane oder konvexe, geschlossene, gedachte erste Fläche. Auf der Innenseite dieser Fläche sind die sechs ILEDs 40, 60 so angeordnet, dass ihre jeweiligen Emissionsrichtungen in einen ersten Innenraum weisen, der durch die erste Fläche begrenzt wird. Mit anderen Worten, alle ILEDs 40, 60 leuchten von der Innenseite der Platine 80 aus in das Innere des dirch Platine 80 definierten Zylinders.

Wie die ILEDs 40, 60 sind auch die positionsempfindlichen Infrarotdetektoren 42, 62 auf der Innenseite der Platine 80 angebracht, also auf einer planen oder konvexen, geschlossenen, gedachten zweiten Fläche. Die sechs positionsempfindlichen Infrarotdetektoren 42, 62 sind so angeordnet, dass ihre jeweiligen lichtempfindlichen Seiten in den zweiten Innenraum weisen. Die erste und die zweite Fläche sind identisch, und damit decken sich auch der erste und der zweite Innenraum vollständig zu einen gemeinsamen Innenraum. Die Lichtemissionseinrichtungen 40, 60 und die positionsempfindlichen Detektoren 42, 62 sind also um den gemeinsamen Innenraum herum angeordnet. Die ILED 40, 60 und der zugehörige positionsempfindlicher Infrarotdetektor 42, 62 einer Messzelle liegen sich gegenüber, und das Licht durchquert den gemeinsamen Innenraum.

Die optoelektronische Anordnung der hier vorgestellten bevorzugten Ausführung kann in sechs Freiheitsgraden Relativbewegungen oder Relativpositionen zweier Objekte messen, nämlich Verschiebungen in drei linear unabhängigen Raumrichtungen und Drehungen um ebenfalls drei linear unabhängige Raumrichtungen. Zu diesem Zweck sind sechs positionsempfindliche Infrarotdetektoren 42, 62 vorgesehen, die zusammen mit den sechs ILEDs 40, 60 sechs Messzellen bilden. Des weiteren sind die positionsempfindlichen Infrarotdetektoren 42, 62 jeweils um 1/3 einer ganzen Umdrehung zueinander um die Symmetrieachse der von der Platine 80 definierten Zylinderfläche gedreht angeordnet. Genauso sind die ILEDs 40, 60 jeweils um 1/3 einer ganzen Umdrehung zueinander um die selbe Symmetrieachse gedreht angeordnet. Die Symmetrieachse steht senkrecht auf der ersten und auf der zweiten Ebene.

Paarweise liegen eine ILED 40 der ersten Ebene und einer ILED 60 der zweiten Ebene übereinander. Genauso liegen ein positionsempfindlicher Infrarotdetektor 42 der ersten Ebene und ein positionsempfindlicher Infrarotdetektor 62 der zweiten Ebene immer paarweise übereinander. Die senkrechten Projektionen der beiden ILEDs 40, 60 bzw. der beiden positionsempfindlichen Infrarotdetektoren 42, 62 auf einer der beiden Ebenen fallen jeweils zusammen. Die ILED-Paare 40, 60 sind zwischen jeweils zwei Paaren positionsempfindlicher Infrarotdetektoren 42, 62 angeordnet.
die Paare von übereinanderliegenden positionsempfindlichen Infrarotdetektoren 42, 62 bestehen aus jeweils einem positionsempfindlichen Infrarotdetektor 42 zum Erfassen einer Bewegung senkrecht zur ersten Ebene und einem positionsempfindlichen Infrarotdetektor 62 zum Erfassen einer Bewegung in der ersten Ebene.

Zu diesem Zweck ist bei jeder Messzelle eine Schlitzblende 44, 64 im Strahlengang der ILED vor dem positionsempfindlichen Infrarotdetektor angeordnet. Sie weisen einen schmalen Schlitz auf, so dass nur ein schmaler Lichtstreifen auf den positionsempfindlichen Detektor 42, 62 fällt. Die Schlitzrichtung der Schlitzblende verläuft dabei senkrecht zur Detektorachse, also in Messrichtung, des Detektors. Dadurch, dass ein Element des Systems Lichtemissionseinrichtung 40, 60, Schlitzblende 44, 64 und positionsempfindlicher Infrarotdetektor 42, 62 relativ zu den anderen beiden Elementen bewegbar angeordnet ist, kann die Messzelle Relativbewegungen und Relativpositionen erfassen.

In der hier vorgesellten bevorzugten Anordnung ist die Schlitzblende 44, 64 relativ zum positionsempfindlichen Detektor 42, 62 und der Lichtemissionseinrichtung 40, 60 bewegbar. Die positionsempfindlichen Detektoren 42, 62 und die ILEDs 40, 60 sind auf der zylinderförmigen Platine 80 fest angeordnet. Die Schlitzblenden 44, 64, die einem Paar übereinanderliegender Detektoren zugeordnet sind, sind zu einer einzigen Schlitzblende 44, 64 mit zwei zueinander senkrechten Schlitzen zusammengefasst.

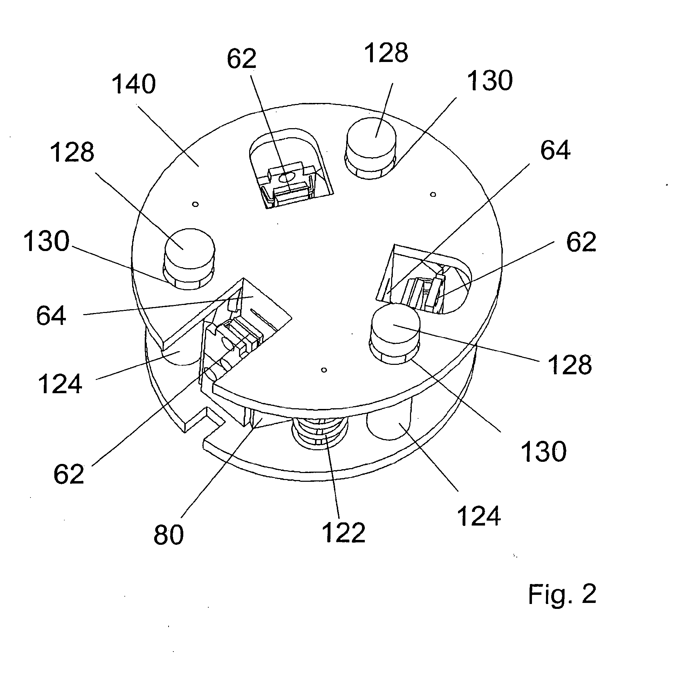

Der ebenfalls in Fig. 1 sowie in Fig. 2 dargestellte Kraft- und/oder Momentensensor besteht aus einer ersten Platte 120 und einer zweiten Platte 140, die elastisch miteinander verbunden und relativ zueinander bewegbar sind. Er ist mit einer erfindungsgemäßen Anordnung zum Erfassen von Relativbewegungen oder Relativpositionen zwischen der ersten Platte 120 und der zweiten Platte 140 ausgestattet. Bei der ersten Platte handelt es sich bevorzugt um eine Leiterplatte, auf der die Leiterplatte 80, welche die ILEDs 40, 60 und die positionsempfindlichen Infrarotdetektoren 42, 62 trägt, fest verlötet ist. Die erste Platte 120 trägt weiter elektronische Komponenten. Die Schlitzblenden 44, 64 sind mit der zweiten Platte 140 durch Löten fest verbunden.

Schraubenfedern 122 wirken als Federeinrichtungen, welche die erste Platte 120 und die zweite Platte 140 elastisch miteinander verbinden. Die Schraubenfedern 122 sind an ihrem einen Ende mit der ersten Platte 120 und an ihrem jeweils anderen Ende mit der zweiten Platte 140 verlötet. Es sind drei Schraubenfedern vorgesehen, die rotationssymmetrisch angeordnet sind, und zwar in der Nähe der Außenseite der Platine 80 bei je einem Paar Infrarotleuchtdioden 40, 60.

Um die Relativbewegungen oder Relativpositionen der beiden Platten 120, 140 zu begrenzen, so dass durch Überlastung keine Beschädigung des Kraft- und/oder Momentensensors auftreten kann, sind drei Anschlageinrichtungen 124 in Form von Anschlagbolzen vorgesehen. Die Anschlagbolzen sind fest mit der ersten Platte 120 verbunden und ragen durch Löcher 130 in der zweiten Platte 120. Die Horizontalbewegung der ersten Platte 120 relativ zur zweiten Platte 140 ist durch den Durchmesser der Anschlagvorrichtungen 124 und den Durchmesser der Löcher 130 in der zweiten Platte 140 bestimmt. Die Bewegung der beiden Platten 120, 140 zueinander ist durch Verdickungen 126, 128 an den bolzenförmigen Anschlagvorrichtungen 124 begrenzt. Der Abstand der Verdickungen 126 128 von der zweiten Platte 140 in Richtung der Bolzen 124 bestimmt den Bereich, in dem die ersten Platte und die zweite Platte 140 in vertikaler Richtung relativ zueinander bewegbar sind.

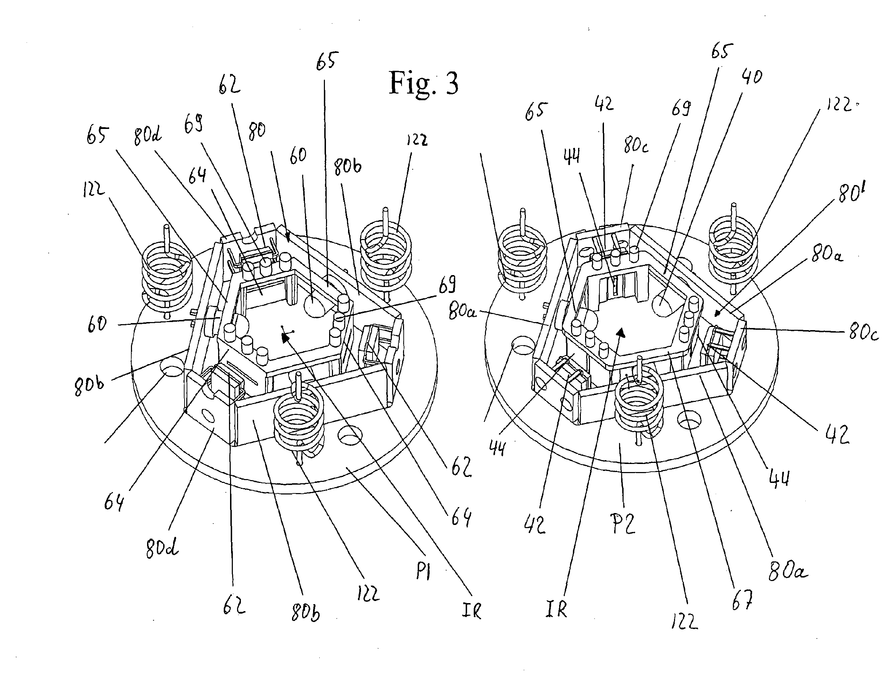

Die zweite Ausführungsform einer optoelektronischen Anordnung zum Erfassen von Relativbewegungen oder Relativpositionen zweier Objekte, die in Fig. 3 dargestellt ist, weist zwölf optoelektronische Elemente, nämlich sechs ILEDs 40, 60 und sechs positionsempfindliche Infrarotdetektoren 42, 62, auf. Sechs optoelektronische Elemente 40, 42, nämlich drei ILEDs 40 und drei positionsempfindliche Infrarotdetektoren 42 sind auf der ersten Fläche und sechs optoelektronische Elemente 60, 62, nämlich drei ILEDs 60 und drei positionsempfindliche Infrarotdetektoren 62 sind auf der zweiten Fläche angeordnet. Als Flächen können hierbei die beiden voneinander getrennten Platinen P1, P2 verstanden werden, auf denen die beiden Gruppen von optoelektronischen Elementen angeordnet sind. Allerdings ist es auch möglich, die beiden Platinen P1, P2 als eine durchgehende Platine auszugestalten. In diesem Fall sind die beiden Flächen in einer Ebene angeordnet.

Jeder positionsempfindliche Infrarotdetektor 42, 62 wird von einer ILED 40, 60 beleuchtet. Dabei beleuchtet eine ILED 40, 60 jeweils genau einen positionsempfindlichen Infrarotdetektor 42, 62, um eine Messzelle zu bilden. Der Lichtstrahl verläuft in der selben Ebene, in der die optoelektronischen Elemente der jeweiligen Messzelle angeordnet sind.

Abweichend von der oben beschriebenen Ausführungsform sind jeweils nur ILEDs 40 oder ILEDs 60 allein auf Platinenstücken 80a, bzw. 80b angebracht, die zusammen mit Platinenstücken 80c, 80d auf denen die positionsempfindlichen Infrarotdetektoren 42, 62 angebracht sind, jeweils eine geschlossene Zylinderfläche 80, 80' mit sechseckigem Querschnitt bilden. Denkt man sich die Öffnungen der Zylinderflächen durch eine obere und eine untere ebene Abschlussfläche geschlossen, entsteht eine an jeder Stelle plane oder konvexe, geschlossene, gedachte Fläche. Auf der Innenseite dieser Fläche sind die sechs ILEDs 40, 60 so angeordnet, dass ihre jeweiligen Emissionsrichtungen in einen Innenraum IR weisen, der durch die Platinenstücke begrenzt wird. Mit anderen Worten, alle ILEDs 40, 60 leuchten von der Innenseite der Platinenstücke aus in das Innere des durch die Platinenstücke definierten Zylinders.

Wie die ILEDs 40, 60 sind auch die positionsempfindlichen Infrarotdetektoren 42, 62 auf der Innenseite der Platinenstücke 80c, 80d angebracht, also ebenfalls auf planen oder konvexen, geschlossenen, gedachten Flächen. Die Lichtemissionseinrichtungen 40, 60 und die positionsempfindlichen Detektoren 42, 62 sind also jeweils um die beiden Innenräume herum angeordnet. Die ILED 40, 60 und der zugehörige positionsempfindliche Infrarotdetektor 42, 62 einer Messzelle liegen sich gegenüber, und das Licht durchquert den jeweiligen gemeinsamen Innenraum IR.

Auch diese Ausführungsform der optoelektronischen Anordnung kann in sechs Freiheitsgraden Relativbewegungen oder Relativpositionen zweier Objekte messen, nämlich Verschiebungen in drei linear unabhängigen Raumrichtungen und Drehungen um ebenfalls drei linear unabhängige Raumrichtungen. Zu diesem Zweck sind sechs positionsempfindliche Infrarotdetektoren 42, 62 vorgesehen, die zusammen mit den sechs ILEDs 40, 60 sechs Messzellen bilden. Des weiteren sind die positionsempfindlichen Infrarotdetektoren 42, 62 jeweils um 1/3 einer ganzen Umdrehung zueinander um die Symmetrieachse der von der Platine 80 definierten Zylinderfläche gedreht angeordnet. Genauso sind die ILEDs 40, 60 jeweils um 1/3 einer ganzen Umdrehung zueinander um die selbe Symmetrieachse gedreht angeordnet. Die Symmetrieachse steht im wesentlichen senkrecht auf der ersten und auf der zweiten Platine P1, P2 bzw. den Flächen.

Die positionsempfindlichen Infrarotdetektoren 42, 62 bestehen aus jeweils einem positionsempfindlichen Infrarotdetektor 42 zum Erfassen einer Bewegung senkrecht zu den Platinen P1, P2 bzw. den Flächen und einem positionsempfindlichen Infrarotdetektor 62 zum Erfassen einer Bewegung im wesentlichen parallel zu den Platinen P1, P2 bzw. den Flächen.

Zu diesem Zweck ist bei jeder Messzelle eine Schlitzblende 44, 64 im Strahlengang der ILED vor dem positionsempfindlichen Infrarotdetektor angeordnet. Die Schlitzblenden 44, 64 weisen einen schmalen Schlitz auf, so dass nur ein schmaler Lichtstreifen auf den jeweiligen positionsempfindlichen Detektor 42, 62 fällt. Die Schlitzrichtung der Schlitzblende verläuft dabei senkrecht zur Detektorachse, also in Messrichtung, des Detektors. Dadurch, dass ein Element des Systems Lichtemissionseinrichtung 40, 60, Schlitzblende 44, 64 und positionsempfindlicher Infrarotdetektor 42, 62 relativ zu den anderen beiden Elementen bewegbar angeordnet ist, kann die Messzelle Relativbewegungen und Relativpositionen erfassen.

In dieser zweiten Anordnung sind die Schlitzblenden 44, 64 relativ zum positionsempfindlichen Detektor 42, 62 und der Lichtemissionseinrichtung 40, 60 bewegbar. Die positionsempfindlichen Detektoren 42, 62 und die ILEDs 40, 60 sind an den jeweiligen zylinderförmigen Platinen 80, 80' fest angeordnet. Dabei sind die Schlitzblenden 64 mit den wagrechten Schlitzen in einem mehreckigen, zum Beispiel als Spritzgußteil ausgebildeten Ring 65 zusammengefügt und in den Innenraum IR der Platine 80 eingebracht. In gleicher Weise sind die Schlitzblenden 44 mit den senkrechten Schlitzen zu einem ebenfalls mehreckigen, als Spritzgußteil ausgebildeten Ring 67 zusammengefügt und in dem jeweiligen Innenraum IR des von der Platine 80 bzw. der Platine 80' definierten Zylinderfläche angeordnet.

Um mit der vorstehend beschriebenen Anordnung einem Kraft- und/oder Momentensensor zu gestalten, wird bei dieser Anordnung in gleicher Weise wie bei der in Fig. 1, 2 dargestellten Ausführungsform eine erste Platte und einer zweiten Platte vorgesehen, die elastisch miteinander verbunden und relativ zueinander bewegbar sind. Der besseren Übersicht halber werden diese beiden Platten in Fig. 3 nicht gezeigt. Bei der ersten Platte handelt kann es sich um die Platine P1 handeln, auf der die Platinenstücke fest verlötet sind, welche die ILEDs 40, 60 und die positionsempfindlichen Infrarotdetektoren 42, 62 tragen. Die erste Platte trägt ggf. weitere elektronische Komponenten. Die Schlitzblenden 44, 64 sind mit der zweiten Platte durch Löten oder Einstecken, Einkleben, Einschweißen oder Einspritzen fest verbunden. Lediglich als Beispiel dienen die Zapfen 69 an den ringförmigen Spritzgußteilen, die in entsprechende Löcher in der zweiten Platte eingesetzt werden.

Schraubenfedern 122 wirken als Federeinrichtungen, welche die erste Platte 120 und die zweite Platte elastisch miteinander verbinden. Die Schraubenfedern 122 sind an ihrem einen Ende mit der ersten Platte und an ihrem jeweils anderen Ende mit der zweiten Platte verlötet. Es sind für jede der beiden Platinen P1, P2 drei Schraubenfedern vorgesehen, die rotationssymmetrisch angeordnet sind, und zwar in der Nähe der Außenseite der Platinen 80, 80' jeweils in der Nähe der ILEDs 40 bzw. 60.

Die zweite Platte ist mit den Schraubenfedern 122 der beiden in Fig. 3 gezeigten Baugruppen der Gesamtanordnung und auch mit den Schlitzblenden 44, 64 beider Baugruppen verbunden. Damit können auf die zweite - in Fig.3 nicht gezeigte - Platte einwirkende Kräfte, Momente oder Verschiebungen oder Rotationen der zweiten Platte gegenüber den Platinen P1, P2 erfasst und ausgewertet werden. Insgesamt funktioniert die Gesamtanordnung der Fig. 3 genauso wie die Ausführungsform nach Fig. 1, 2; sie baut jediglich flacher.

Um die Relativbewegungen oder Relativpositionen der beiden Platten zu begrenzen, sind den drei Anschlageinrichtungen aus den Fig. 1, 2 entsprechende Anschlageinrichtungen vorgesehen. Deren Funktion und Gestalt kann der aus den Fi. 1, 2 vollständig entsprechen. Daher ist ihre nochmalige vollständige Erläuterung hier entbehrlich.

## Patentansprüche

1. Optoelektronische Anordnung zum Erfassen von Relativbewegungen oder Relativpositionen zweier Objekte, wobei die Anordnung mindestens vier optoelektronische Elemente (40, 42, 60, 62) umfasst, wobei die optoelektronischen Elemente in mindestens einer ersten Fläche und zumindest einer zweiten Fläche angeordnet sind, dergestalt, dass mindestens drei optoelektronische Elemente auf der ersten Fläche und mindestens ein optoelektronisches Element auf der zweiten Fläche angeordnet ist, und sich die beiden Flächen nebeneinander befinden.

2. Optoelektronische Anordnung nach Anspruch 1, **dadurch gekennzeichnet, dass** jedes der mindestens vier optoelektronischen Elemente entweder ein positionsempfindlicher Detektor (42, 62) oder eine Lichtemissionseinrichtung (40, 60) ist, und jeder positionsempfindliche Detektor (42, 62) von einer Lichtemissionseinrichtung (40,60) beleuchtet wird, um eine Messzelle zu bilden.

3. Optoelektronische Anordnung nach Anspruch 2, **dadurch gekennzeichnet, dass** eine Lichtemissionseinrichtung (40, 60) jeweils genau einen positionsempfindlichen Detektor (42, 62) beleuchtet, um eine Messzelle zu bilden.

4. Optoelektronische Anordnung nach Anspruch 3, **dadurch gekennzeichnet, dass** eine Lichtemissionseinrichtung (40, 60) mindestens zwei positionsempfindliche Detektoren (42, 62) beleuchtet, um zwei Messzellen mit einer gemeinsamen Lichtemissionseinrichtung (40, 60) zu bilden.

5. Optoelektronische Anordnung nach einem der Ansprüche 2 bis 4, **dadurch gekennzeichnet, dass** die Lichtemissionseinrichtungen (40, 60) so auf einer an jeder Stelle planen oder konvexen, geschlossenen, gedachten ersten Fläche, angeordnet sind, dass ihre jeweiligen Emissionsrichtungen in einen ersten Innenraum weisen, der durch die erste Fläche begrenzt wird.

6. Optoelektronische Anordnung nach einem der Ansprüche 2 bis 5, **dadurch gekennzeichnet, dass** die positionsempfindlichen Detektoren (42, 62) so auf einer an jeder Stelle planen oder konvexen, geschlossenen, gedachten zweiten Fläche angeordnet sind, dass ihre jeweiligen lichtempfindlichen Seiten in einen zweiten Innenraum weisen, der durch die zweite Fläche begrenzt wird, und sich vorzugsweise der erste und der zweite Innenraum teilweise oder vollständig decken.

7. Optoelektronische Anordnung nach einem der Ansprüche 2 bis 6 **dadurch gekennzeichnet, dass** die optoelektronische Anordnung mindestens sechs positionsempfindliche Detektoren (42, 62) umfasst um sechs Freiheitsgrade zu messen und jede Ebene genau drei positionsempfindliche Detektoren (42, 62) umfasst.

8. Optoelektronische Anordnung nach einem der Ansprüche 2 bis 7, **dadurch gekennzeichnet, dass** die positionsempfindlichen Detektoren (42, 62) in jeweils derselben Ebene in ihrer Orientierung in im wesentlichen gleichem Winkelabstand zueinander um eine Achse gedreht sind, die im wesentlichen senkrecht zu der Ebene verläuft, in der die positionsempfindlichen Detektoren (42, 62) angeordnet sind.

9. Optoelektronische Anordnung nach einem der Ansprüche 2 bis 8, **dadurch gekennzeichnet, dass** sie zumindest eine weitere Ebene mit optoelektronischen Elementen umfasst.

10. Optoelektronische Anordnung nach einem der Ansprüche 2 bis 9, **dadurch gekennzeichnet, dass** paarweise eine Lichtemissionseinrichtung (40) der ersten Ebene und einer Lichtemissionseinrichtung (60) der zweiten Ebene übereinanderliegen und vorzugsweise paarweise ein positionsempfindlicher Detektor (42) der ersten Ebene und ein positionsempfindlicher Detektor (62) der zweiten Ebene übereinanderliegen, jeweils derart, dass die senkrechten Projektionen der beiden Lichtemissionseinrichtungen (40, 60) bzw. der beiden positionsempfindlichen Detektoren (42, 62) auf einer der beiden Ebenen im wesentlichen zusammenfallen.

11. Optoelektronische Anordnung nach einem der Ansprüche 2 bis 10, **dadurch gekennzeichnet, dass** die Paare von übereinanderliegenden positionsempfindlichen Detektoren (42, 62) jeweils einen positionsempfindlichen Detektor (42) zum Erfassen einer Bewegung im wesentlichen senkrecht zur ersten oder zweiten Ebene und einen positionsempfindlichen Detektor (62) zum Erfassen einer Bewegung im wesentlichen in der ersten oder zweiten Ebene umfassen.

12. Anordnung nach einem der Ansprüche 2 bis 11, **dadurch gekennzeichnet, dass** die Messzellen außerdem je eine im Strahlengang der Lichtemissionseinrichtung (40, 60) zwischen der Lichtemissionseinrichtung (40, 60) und dem positionsempfindlichen Detektor (42, 62) angeordnete Schlitzblende (44, 64) umfassen, wobei eine Detektorachse des positionsempfindlichen Detektors (42, 62) im wesentlichen senkrecht zu einer Schlitzrichtung der Schlitzblende (44, 64) ausgerichtet ist und ein Element des Systems bestehend aus Lichtemissionseinrichtung (40, 60), Schlitzblende und Detektor (42, 62) relativ zu den anderen beiden Elementen bewegbar ist.

13. Anordnung nach Anspruch 12, **dadurch gekennzeichnet, dass** bei jeder Messzelle die Schlitzblende (44, 64) relativ zum positionsempfindlichen Detektor (42, 62) und der Lichtemissionseinrichtung (40, 60) bewegbar ist.

14. Anordnung nach Anspruch 12 oder 13, **dadurch gekennzeichnet, dass** die positionsempfindlichen Detektoren (42, 62) und/oder die Lichtemissionseinrichtungen (40, 60) auf einer Platine 80 angebracht sind, die zylinderförmig ist.

15. Kraft- und/oder Momentensensor mit einer ersten Platte und einer zweiten Platte, wobei die erste Platte (120) und die zweite Platte (140) elastisch miteinander verbunden und relativ zueinander bewegbar sind, **gekennzeichnet durch** eine optoelektronische Anordnung zum Erfassen von Relativbewegungen oder Relativpositionen zweier Objekte nach einem der Ansprüche 1 bis 14.

16. Kraft- und/oder Momentensensor nach Anspruch 15, **dadurch gekennzeichnet, dass** die erste und die zweite Platte (120, 140) über mindestens eine Feder- und/oder Dämpfungseinrichtung (122) miteinander verbunden sind.

17. Kraft- und/oder Momentensensor nach einem der Ansprüche 15 oder 16, **dadurch gekennzeichnet, dass** die mindestens eine Feder- und/oder Dämpfungseinrichtung (122) eine der nachfolgenden Komponenten oder Kombinationen daraus umfasst: Schraubenfeder, Federpaket, Elastomer, Gießharz.

18. Kraft- und/oder Momentensensor nach einem der Ansprüche 16 oder 17, **dadurch gekennzeichnet, dass** die Feder- und/oder Dämpfungseinrichtungen (122) im wesentlichen rotationssymmetrisch angeordnet sind.

19. Kraft- und/oder Momentensensor nach einem der Ansprüche 16 bis 18, **dadurch gekennzeichnet, dass** mindestens eine der Feder- und/oder Dämpfungseinrichtungen (1220) mindestens eine Schraubenfeder umfasst, die durch Löten fest mit der ersten und zweiten Platte (120, 140) verbunden ist.

20. Kraft- und/oder Momentensensor nach einem der Ansprüche 15 bis 19, **gekennzeichnet durch** mindestens eine Anschlageinrichtung (124), welche die Bewegung der ersten Platte relativ zur zweiten Platte begrenzt.

21. Personalcomputer-Tastatur, **dadurch gekennzeichnet, dass** sie einen Kraft- und/oder Momentensensor nach einem der Ansprüche 15 bis 20 aufweist.
